# EUROPÄISCHE PATENTANMELDUNG

(11) **EP 1 062 902 A2**
(43) Veröffentlichungstag der Anmeldung: **27.12.2000**
(21) Anmeldenummer: 00112139.1
(22) Anmeldetag: 06.06.2000
(51) Int. Cl.: A47L 9/24

(54) **Anschlussstutzen**

(30) Priorität: 08.06.1999 DE 19926049
(71) Anmelder: Steffgen, Helga, 66892 Bruchmühlbach-Miesau (DE)
(72) Erfinder: Steffgen, Helga, 66892 Bruchmühlbach-Miesau (DE)
(74) Vertreter: Magin, Ludwig Bernhard

(57) **Zusammenfassung**

Bekannte Anschlußstutzen für Staubsauger dienen der Verbindung zwischen einem Saugschlauch und einer Saugdüse. Herkömmlicherweise weisen der Saugschlauch, die Saugdüse und der Anschlußstutzen Verbindungen auf, die bei den jeweiligen Herstellern mit eigenen Profilen und Durchmessern versehen sind, so daß sie nicht untereinander ausgetauscht werden können.

Es wird ein Anschlußstutzen 14 vorgeschlagen, der einen konischen Innenraum aufweist, in dem wahlweise eine Gewindenut 32 vorhanden ist. Aufgrund der Konizität kann der Saugschlauch 12 festgeklemmt werden; mittels der Gewindenut 32 kann ein mit einer der Verstärkung dienenden Spirale 22 versehener Saugschlauch 12 eingeschraubt werden.

Derartige Anschlußstutzen 14 können sowohl in der industriellen Fertigung wie auch im Handwerk oder auch privat eingesetzt werden.

## Beschreibung

Die Erfindung betrifft einen Anschlußstutzen einer Saugvorrichtung mit einer Hülse zur lösbaren Verbindung mit einem Saugschlauch einerseits und zur dauerhaften oder lösbaren Verbindung mit einer Saugdüse andererseits.

Es ist bekannt, an Staubsaugern, insbesondere im professionellen Bereich, eine Saugdüse, die in verschiedener Weise ausgebildet sein kann, mittels eines Anschlußstutzens mit einem flexiblen Saugschlauch zu verbinden. Der Saugschlauch ist gewöhnlich aus Kunststoff gebildet und mit einer Verstärkungsspirale in seiner Wandung versehen, die meist aus Metall ansonsten aus Kunststoff besteht. Bei einigen Ausführungen ist der Anschlußstutzen unlösbar mit der Absaugdüse verbunden, bei anderen lösbar oder beweglich. Die Verbindung des Saugschlauchs mit dem Anschlußstutzen erfolgt ebenfalls fest oder lösbar. Bei einigen Ausführungsformen ist der Querschnitt rund, bei anderen kantig oder rund und kantig oder oval.

Es ist aus der US-A-3,565,464 bekannt, einen Saugschlauch in eine Kupplung einzuschrauben, während die DE-A-3 131 379 einen Staubsauger zeigt, dessen Führungshandrohr in eine konische Muffe eingesteckt werden kann.

Das der Erfindung zugrunde liegende Problem wird darin gesehen, daß Saugdüsen verschiedener Hersteller kaum an Saugschläuche oder Anschlußstutzen anderer Hersteller angeschlossen werden können.

Dieses Problem ist erfindungsgemäß durch die Lehre des Patentanspruchs 1 gelöst worden, wobei in den davon abhängigen Patentansprüchen diese Lehre vorteilhaft fortentwickelnde Merkmale enthalten sind.

Auf diese Weise kann in ein und derselben Hülse sowohl ein Saugschlauch mit einem Gewinde, das sich aus einer Verstärkungsspirale in der Schlauchwandung ergibt, als auch ein glattes Rohr eingesetzt und gesichert werden. Der jeweilige Saugschlauch wird so tief in den Anschlußstutzen eingeschoben oder gedreht, bis er aufgrund der Konizität kraftschlussig oder aufgrund des Gewindes formschlüssig gehalten wird. Die Konizität erhöht dabei auch die Haltekraft in dem Gewinde. Durch die Wahl der Länge und des Öffnungswinkels der Hülse kann der Bereich verwendbarer Durchmesser und die Reibkraft bestimmt werden. Diese Art der konischen Verbindung eignet sich insbesondere dann, wenn der Saugschlauch außen glatt wie eine Hülse ausläuft oder mit einer derart geformten Hülse endet. Die Gewindeverbindung eignet sich bei entsprechend geformten Saugschläuchen, insbesondere, wenn sie höheren mechanischen Ansprüchen unterliegen. Alles in allem ist innerhalb bestimmter Grenzen jeder Saugschlauch bzw. jede Hülse einsteckbar und zweifach befestigbar.

Weicher Kunststoff übt aufgrund seiner Elastizität beim Einschrauben des Saugschlauchs in den Konus eine zusätzliche Klemmkraft aus, die verhindert, daß sich der Saugschlauch in dem Anschlußstutzen beim Betrieb löst.

Da nicht nur die Saugschläuche, sondern auch die Saugdüsen Anschlüsse unterschiedlichen Durchmessers aufweisen, ist es hilfreich, wenn der Anschlußstutzen im Verbindungsbereich mit der Saugdüse nachgiebig ausgebildet ist, was insbesondere dadurch erreicht wird, daß im Anschlußbereich an die Saugdüse eine Schulter mit nachgiebigen voneinander getrennten Haltern vorgesehen ist.

Eine J-förmige, das heißt etwas gebogene Form des Anschlußstutzens macht es möglich, diesen in der richtigen Ausrichtung an die Saugdüse anzuschließen. Hierunter fallen alle möglichen Formen eines Stutzens, bei den zwei oder mehr Abschnitte unter verschiedenen Winkeln verlaufen.

Neben der ohnehin im Schutzbereich enthaltene Ausführung der Spirale und der Nuten in dem Anschlußstutzen als Rechtsgewinde, macht es die Ausbildung des Gewindes als Linksgewinde möglich, handelsübliche Schläuche mit Spiralverstärkungen als Saugschläuche zu verwenden.

Läuft auch das Gewinde in einem Konus anstatt z. B. an einer Schulter aus, erfährt der eingeschraubte Saugschlauch in seinem Endbereich eine zusätzliche Klemmkraft.

Wenn in dem Einsteckbereich des Saugschlauchs in die Hülse eine Innenringnut eingearbeitet ist, in die eine Schulter eines Saugschlauchanschlusses einsetzbar ist, kann eine Drehkupplung nicht nur zwischen der Saugdüse und der Hülse, sondern auch zwischen der Hülse und einem Saugschlauch erreicht werden. Auf diese Weise kann auch ein Saugschlauch neben einer Schraub- und einer Konusverbindung auf eine dritte Art an die Saugdüse angeschlossen werden, so daß die Universalität des Anschlußstutzens erhöht wird. Der Saugschlauch kann auch eine Saugschlauchverlängerung sein.

In der Zeichnung ist ein Ausführungsbeispiel der Erfindung dargestellt. Es zeigt:
- Fig. 1: eine Saugdüse mit einem Anschlußstutzen und einem Saugschlauch in einer Seitenansicht,

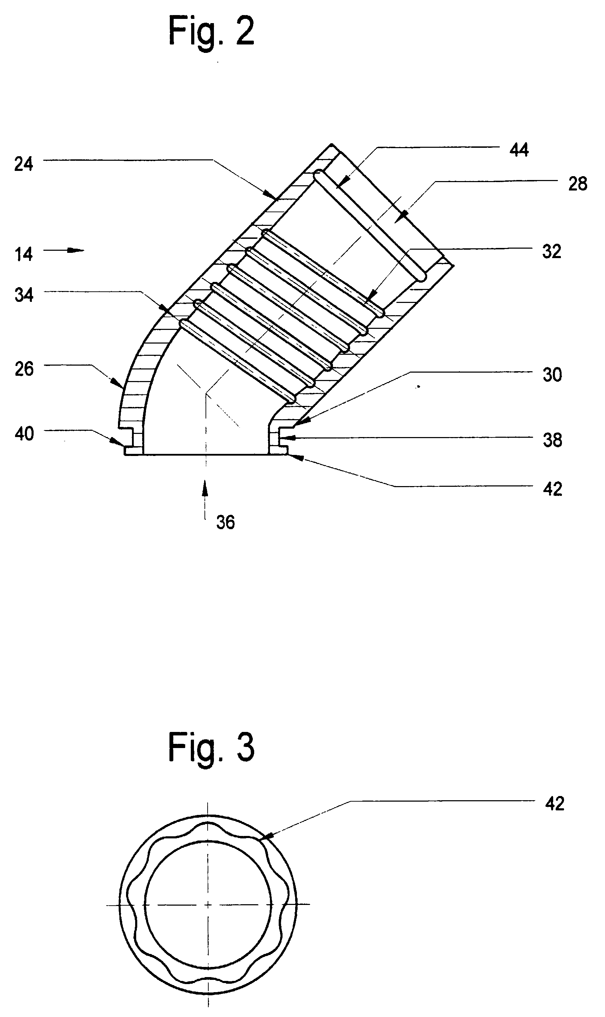

- Fig. 2: den Anschlußstutzen in einem Längsschnitt und
- Fig. 3: den Anschlußstutzen an einem düsenseitigen Ende in einer Vorderansicht.

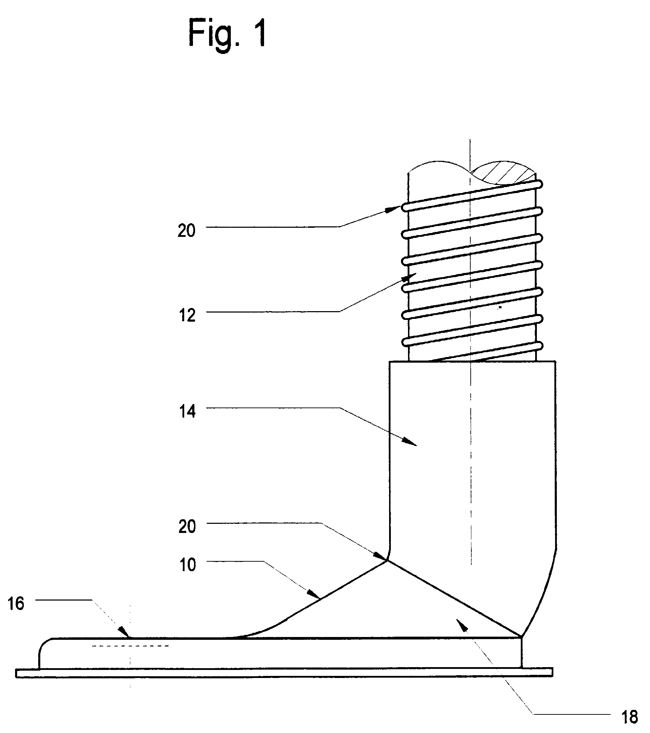

Figur 1 zeigt einen Zusammenbau aus einer Saugdüse 10, einem Saugschlauch 12 und einem erfindungsgemäßen Anschlußstutzen 14.

Die Saugdüse 10 ist in diesem Ausführungsbeispiel als eine Bohrabsaugdüse dargestellt, die eine Öffnung 16 zum Durchführen eines nicht gezeigten Bohrers enthält und sich an einer Wand oder dergleichen festsaugt. An dem der Öffnung 16 gegenüberliegenden Endbereich ist die Saugdüse 10 mit einer Muffe 18 versehen, die eine nach innen gerichtete Ringschulter 20 aufweist.

Der Saugschlauch 12 besteht aus einer Kunststoffwandung mit einer eingelegten Spirale 22, die auf dem Außenumfang der Kunststoffwand Gewindestege hinterläßt. In dem gezeigten Ausführungsbeispiel sind diese als Linksgewinde ausgeführt. Der Saugschlauch 12 hat einen Außendurchmesser von 35 mm und endet ohne besonderen Abschluß durch einen einfachen Schnitt. Selbstverständlich kommen kleiner oder größere Durchmesser infrage.

Der Anschlußstutzen 14 weist in dem bevorzugten Ausführungsbeispiel insgesamt die Form eines 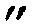 J" auf, d. h. er erstreckt sich über einen großen Abschnitt in einer Hülse 24 zylindrisch und um eine gerade Mittenachse und über einen kleinen Abschnitt in einem Bogen 26. Das Material, aus dem der Anschlußstutzen 14 gebildet ist, ist ein weicher Kunststoff, nämlich ein Polyurethan-, PE- oder PP-Kunststoff oder auch Gummi bzw. Kautschuk. Die Hülse 24 wie auch der Bogen 26 weisen den gleichen Außendurchmesser auf.

Während der Außendurchmesser der Hülse 24 über deren gesamte Länge von ca. 50 mm konstant ist und ca. 45 mm beträgt, nimmt der Innendurchmesser vom Beginn der Hülse 24 gegenüber dem Bogen 26 beginnend kontinuierlich ab. Bei einer bevorzugten Ausführungsform findet eine gleichmäßige Durchmesserveränderung von 38 mm an einem Saugschlauchende 28 auf 30 mm an einem Bogenende 30 statt. Ungefähr nach einem Drittel der Länge der Hülse 24 beginnend an dem Saugschlauchende 28 beginnt auf der Innenumfangsfläche der Hülse 24 eine Gewindenut 32 mit einer Steigung von ca. 8 mm und einer Breite von ca. 3 mm. Die Steigung und die Breite der Gewindenut 32 entsprechen der Steigung und der Breite der Spirale 22 des Saugschlauchs 12. Die Tiefe der Gewindenut 32 nimmt mit geringer werdenden Innendurchmesser zu. Die Konizität der Hülse 24 setzt sich bis zu dem Bogenende 30 fort, so daß die Hülse 24 übergangslos in den Bogen 26 übergeht.

Der Bogen 26 weist ein Hülsenende 34 und ein Düsenende 36 auf und verläuft zwischen diesen mit einer Krümmung über einen Bogen von ca. 45 Grad. Der Bogen 26 besitzt zwischen seinem Hülsenende 34 und seinem Düsenende 36 einen gleichen Außendurchmesser, der dem der Hülse 24 entspricht, und einen gleichen Innendurchmesser, der dem der Hülse 24 an der Schnittstelle Bogenende 30/Hülsenende 34 entspricht. An dem Düsenende 36 läuft der Bogen 26 mit einer Nut 38 und einer Ringschulter 40 aus. Die Nut 38 ist so bemessen, daß sie die Ringschulter 20 an der Muffe 18 der Saugduse 10 aufnehmen kann. Die Ringschulter 40 ist so bemessen, daß sie die Ringschulter 20 in der Saugdüse 10 hintergreifen kann. Während die Ringschulter 20 in der Saugdüse 10 eine runde Innenumfangsform besitzt, ist der Innenumfang der Ringschulter 40 gewellt und bildet somit Halter 42 in der Art von Bögen, die sich beim Bewegen über die Ringschulter 20 relativ leicht umbiegen lassen und anschließend wieder aufrichten, um in die Nut 38 einzutreten und einen Formschluß herzustellen. Nach alledem ergibt sich folgender Zusammenbau bzw. folgende Funktion.

Im Betrieb wird der Anschlußstutzen 14 mit dem Düsenende 36 in die Muffe 18 der Saugdüse 10 eingesetzt, wobei die Ringschulter 40 in die Nut 38 einrastet. Während der Anschlußstutzen 14 nun im wesentlichen in der Längsrichtung nur noch unter erheblicher Kraftaufbietung von der Saugdüse 10 getrennt werden kann, kann er dieser gegenüber leicht geschwenkt werden.

Der Saugschlauch 12 wird soweit in den Anschlußstutzen 14 hineingesteckt, bis er anliegt. Alleine aufgrund der Konizität ergibt sich nun bereits eine ausreichende Haltekraft, die in der Vielzahl der Anwendungen ausreicht.

Nach einer alternativen Ausbildung wird nun auch die Gewindeverbindung bestehend aus der Spirale 22 und der Gewindenut 32 benutzt, d. h. der Saugschlauch 12 wird in die Hülse 24 solange hineingeschraubt, bis er entweder aufgrund der Konizität klemmt oder nicht mehr weiter geschraubt werden kann, weil er z. B. an den Bogen 26 anschlägt.

Schließlich befindet sich mit geringem Abstand zu dem oberen Rand der Hülse 24 in deren Innenwandung eine Ringnut 44 mit einem halbkreisförmigen Profil, die geeignet ist, eine Schulter an einem Anschlußstück aufzunehmen, das sich z. B. am Ende eines Saugschlauches 12 befindet, der als Verlängerungsstück ausgebildet ist. Die Schulter und die Ringnut 44 können je nach den gewählten Passungen sowohl ein Drehgelenk als auch eine feste Verbindung bilden.

## Patentansprüche

1. Anschlußstutzen (14) einer Saugvorrichtung mit einer Hülse (24) zur lösbaren Verbindung mit einem Saugschlauch (12) einerseits und zur dauerhaften oder lösbaren Verbindung mit einer Saugdüse (10) andererseits, dadurch gekennzeichnet, daß die Hülse (24) im Aufnahmebereich des Saugschlauchs (12) innen konisch ausgebildet ist und im Aufnahmebereich des Saugschlauchs (12) mit einem Gewinde versehen ist, dessen Neigung und Größe dem Außenprofil eines Saugschlauchs (12) entspricht.

2. Anschlußstutzen nach Anspruche 2, dadurch gekennzeichnet, daß die Hülse (24) aus einem weichen Kunststoff hergestellt ist.

3. Anschlußstutzen nach Anspruch 1 oder 2, dadurch gekennzeichnet, daß im Anschlußbereich des Anschlußstutzens (14) an die Saugduse (10) eine Ringschulter (40) mit nachgiebigen voneinander getrennten Haltern (42) vorgesehen ist.

4. Anschlußstutzen nach einem oder mehreren der vorherigen Ansprüche, dadurch gekennzeichnet, daß er J-förmig ausgebildet ist.

5. Anschlußstutzen nach einem oder mehreren der vorherigen Ansprüche, dadurch gekennzeichnet, daß das Gewinde als Linksgewinde ausgebildet ist.

6. Anschlußstutzen nach einem oder mehreren der vorherigen Ansprüche, dadurch gekennzeichnet, daß der Bereich des Gewindes konisch ausläuft.

7. Anschlußstutzen nach einem oder mehreren der vorherigen Ansprüche, dadurch gekennzeichnet, daß die Hülse (24) im Anschlußbereich des Saugschlauchs (12) an der Innenwandung mit einer Ringnut (44) versehen ist.
